# EUROPÄISCHE PATENTANMELDUNG

(11) **EP 4 063 991 A1**
(43) Veröffentlichungstag der Anmeldung: **28.09.2022**
(21) Anmeldenummer: 22163570.9
(22) Anmeldetag: 22.03.2022
(51) Int. Cl.: G05D 16/06

(54) **DRUCKREGELEIGENSCHAFT- FÜHRUNGSSCHAFT**

(30) Priorität: 23.03.2021 DE 102021107205
(71) Anmelder: ebm-papst Landshut GmbH, 84030 Landshut (DE)
(72) Erfinder: Georgi, Plamen, 84032 Altdorf (DE); Stolz, Sebastian, 84030 Ergolding (DE)
(74) Vertreter: Otten, Roth, Dobler & Partner mbB Patentanwälte

(57) **Zusammenfassung**

Gasstromregelventil 3, wobei das Gasstromregelventil 3 ein Gehäuse 11 mit einem Gaseinlass 10, ein in dem Gehäuse 11 angeordneten Ventilsitz 6, ein dem Ventilsitz 6 zugeordneten Ventilkörper 5, wobei der Ventilkörper 5 von einer oberen Feder und einer unteren Feder gehalten und mittels einer Membran 26 zentriert ist, sowie einen dem Ventilkörper 5 nachgelagerten, in dem Gehäuse 11 vorgesehenen Gasauslass 12 umfasst, wobei der Ventilkörper 5 in dem Ventilsitz 6 zur Ausbildung eines regelbaren Querschnitts einer Durchtrittsöffnung 25 für den Gasdurchtritt in einer ersten Bewegungsrichtung 17 beweglich angeordnet ist, wobei ein dem Ventilsitz 6 nachgeordneter Führungskorb 15 in dem Gehäuse 11, bevorzugt an dem Ventilsitz 6 oder einer Federaufnahme ausgebildet ist und an dem Ventilkörper 5 ein Führungsschaft 14 ausgebildet ist, wobei der Führungsschaft 14 in mindestens einem Abschnitt des Führungskorbs 15 linear in Öffnungsrichtung des Ventils geführt ist und insbesondere einen Dämpfer 16 für die Bewegung des Ventilkörpers 5 umfasst.

## Beschreibung

### Stand der Technik:

Aus dem Stand der Technik, insbesondere aus der DE 10 2012 102 646 A1 oder der DE 10 2018 102 886 A1 der Anmelderin sind Gasregelventile und Gasregelventilanordnungen bekannt, welche eine präzise Volumenstromregelung eines Gasstroms erlauben. Hinsichtlich der Funktionsweise derartiger Gasregelventile bzw. Gasregelventilanordnungen wird auf diese Offenlegungsschriften Bezug genommen und deren Inhalte im Umfang der Figurenbeschreibung und der Figuren werden durch Einbezug mittels Verweis zur Offenbarung dieser Patentanmeldung gemacht.

### Aufgabe und Vorteile der Erfindung:

Bei Gasregelventilen ist stets das Bestreben gegeben, die Druckregeleigenschaften und Durchflusskapazitäten zu optimieren und auftretende Sekundäreffekte, wie z.B. Geräuschbildung durch periodische Druckschwankungen zu vermeiden. Um diese Eigenschaften zu verbessern ist eine präzise Abstimmung des Regelsystems eines Gasregelventils, insbesondere bei kleinen Öffnungsquerschnitten und zunehmenden Volumenströmen notwendig.

Ausgehend von einem Gasregelventil nach dem Stand der Technik wird die Verbesserung der Druckregeleigenschaften durch ein Gasregelventil nach den Merkmalen des Anspruchs 1 erzielt. Vorteilhafte Weiterbildungen und zweckmäßige Ausgestaltungen sind durch die abhängigen Ansprüche gegeben.

Ein Diffusor im Sinne der Erfindung ist dabei ein Bauteil, welches durch seine Geometrie, bei gegebener Strömung eines Gases, den Strömungsquerschnitt entlang der Strömungsrichtung vergrößert. Durch die Querschnittsveränderung wird hinter dem Diffusor ein Unterdruck erzeugt, welcher auf bewegliche Bauteile einwirkt.

Das Querschnittsverhalten im Sinne der Erfindung ist der Verlauf des Querschnitts der Öffnung zwischen dem Ventilsitz und dem Ventilkörper, welcher den, für die Durchströmung mit Gas, zur Verfügung stehenden Querschnitt ausbildet.

Zur Lösung der Aufgabe wird ein Gasstromregelventil vorgeschlagen, wobei das Gasstromregelventil ein Gehäuse mit einem Gaseinlass, ein in dem Gehäuse angeordneten Ventilsitz, ein dem Ventilsitz zugeordneten Ventilkörper, wobei der Ventilkörper von einer oberen Feder und einer unteren Feder gehalten und mittels einer Membran zentriert ist, sowie einen dem Ventilkörper nachgelagerten, in dem Gehäuse vorgesehenen Gasauslass umfasst. Der Ventilkörper ist dabei in dem Ventilsitz zur Ausbildung eines regelbaren Querschnitts einer Durchtrittsöffnung für den Gasdurchtritt in einer ersten Bewegungsrichtung beweglich angeordnet. Die Erfindung ist dadurch gekennzeichnet, dass ein dem Ventilsitz nachgeordneter Führungskorb in dem Gehäuse, bevorzugt an dem Ventilsitz oder einer Federaufnahme ausgebildet ist und an dem Ventilkörper ein Führungsschaft ausgebildet ist, wobei der Führungsschaft in mindestens einem Abschnitt des Führungskorbs linear in Öffnungsrichtung des Ventils geführt ist und insbesondere einen Dämpfer für die Bewegung des Ventilkörpers umfasst.

Das Gasstromregelventil ist ein Feder-Masse-Feder-System und neigt bei bestimmten Betriebsbedingungen zum Schwingen. Bei Schwingungen quer und axial zur Öffnungs- und Schließrichtung berührt der Führungsschaft die Führung und verhindert dadurch die Anregung der Schwingung in Querrichtung und in axialer Richtung. Die Führung verhindert zudem das unerwünschte Auslenken des Regelventils und nimmt keinen Einfluss auf das Regelverhalten. Optional kann das System um einen Luftdämpfer ergänzt werden, wodurch Schwingungen in axialer Richtung reduziert werden können.

Weiterhin ist vorgesehen, dass das Gasstromregelventil einen verstellbaren Diffusor umfasst.

Das Vorsehen eines verstellbaren Diffusors, also eines veränderbaren Verlaufs eines sich öffnenden Querschnitts in der Durchtrittsöffnung bewirkt eine dadurch gegebene Druckregelung mit einer homogeneren Durchströmung des Ventils und damit einhergehender Kapazitätserhöhung.

Bevorzugt ist dabei vorgesehen, dass an dem Ventilsitz im Bereich der Durchtrittsöffnung eine Ventilsitz-Diffusorgeometrie und/oder an dem Ventilkörper im Bereich der Durchtrittsöffnung eine Ventilkörper-Diffusorgeometrie umfasst ist.

Bei bestimmten Durchflussströmungen entsteht je nach Ventilstellung und Betriebsdruck durch eine Anordnung einer Diffusorgeometrie im Bereich des Regelventils eine resultierende Kraft welche das Ventil je nach Durchflussstrom schließt oder öffnet. Dies wirkt sich vorteilhaft auf das Regelverhalten des Gasstromregelventils aus.

Überdies ist bei dem Gasstromregelventil vorgesehen, dass der verstellbare Diffusor sein verstellbares Querschnittsverhalten mittels zweier sich voneinander entfernender Kurven, insbesondere nicht linearer Kurven, bevorzugt überlagert mit einem Offset in Öffnungsrichtung, aufweist.

Das Querschnittsverhalten durch zwei nicht lineare Kurven bewirkt eine besonders gute Strömungsführung und begünstigt dabei die Wirkung des Diffusors auf den Ventilkörper.

Insbesondere ist dazu vorgesehen, dass an dem Ventilsitz, vor der Durchtrittsöffnung eine Einlaufstrecke, bevorzugt in Strömungsrichtung eine gleichförmige Einlaufstrecke, insbesondere eine hohlzylinderförmige Einlaufstrecke ausgebildet ist.

Durch die in Strömungsrichtung gleichförmige Einlaufstrecke wird eine homogenere Anströmung des Regelventils erzeugt, durch welche Strömungsgeräusche reduziert werden und durch gleichmäßigere Durchströmung die Kapazität des Gasventils erhöht wird.

Bevorzugt ist bei dem Gasstromregelventil die Durchtrittsöffnung als Ringspalt ausgebildet, was ebenfalls die homogene Durchströmung begünstigt und eine gleichmäßige Wirkung des Diffusors erlaubt.

In einer bevorzugten Ausführungsform ist vorgesehen, dass die Ventilsitz-Diffusorgeometrie einstückig mit dem Ventilsitz ausgebildet ist.

Auf diese Weise lässt sich die Geometrie definiert und zusätzlich kostengünstig in die Baugruppe bei der Herstellung abstimmen und integrieren.

Ebenso ist in einer bevorzugten weiteren oder ergänzenden Ausführungsform vorgesehen, dass die Ventilkörper-Diffusorgeometrie einstückig mit dem Ventilkörper ausgebildet ist, um die oben genannten Vorteile zu erzielen.

Besonders bevorzugt ist die Ventilsitz-Diffusorgeometrie als Hohlkehle ausgebildet. Durch die Ausbildung als Hohlkehle wird die vorgegebene Strömungsrichtung des Gasstroms durch das Ventil unter Vermeidung von Abrisskanten geführt, was die Durchströmung begünstigt und eine gleichmäßige Wirkung des Diffusors erlaubt.

Überdies ist auch vorgesehen, dass die Ventilkörper-Diffusorgeometrie als Ringsegment, insbesondere mit konvexer Mantelkontur, bevorzugt mit kreisförmiger Mantelkontur ausgebildet ist.

Die Ausbildung als Ringsegment erlaubt die Nutzung unterschiedlicher Abschnitte der Ventilkörper-Diffusorgeometrie, einerseits als Führungselement für die Strömung des Gasstroms, anderseits als Konturelement für die Ausbildung eines sich aufweitenden Querschnittsverlaufs, welcher die Effekte eines Diffusors bereitstellt.

Der beschriebene Verlauf ist insbesondere dadurch vorteilhaft gegeben, dass die Ventilkörper-Diffusorgeometrie mit der Ventilsitz-Diffusorgeometrie in einem in Strömungsrichtung oberen Abschnitt einen Strömungskanal ausbildet und in einem in Strömungsrichtung folgenden unteren Abschnitt eine Aufweitung zwischen den Radien einen Diffusorkanal ausbildet. Wenn der Ventilkörper derart geöffnet ist, dass der "Diffusoreffekt" nachlässt, entsteht in dem Hohlraum unter dem Ventilkörper ein Unterdruck, der den Ventilkörper zusätzlich nach unten zieht. Dies trägt dazu bei, dass die Kapazität erhäht wird und die druckunabhängige Regelung länger fortgesetzt wird.

Der strömungsbegünstigende obere Abschnitt nimmt dabei den Gasstrom in einem Strömungskanal auf und führt diesen unter Vermeidung von Abrisskanten oder Störstellen dem sich aufweitenden unteren Abschnitt als Diffusorkanal zu. Auf diese Weise wird eine gleichmäßige und ungestörte Anströmung des Diffusors erzielt, was die Durchströmung begünstigt und eine gleichmäßige Wirkung des Diffusors erlaubt.

In einer bevorzugten Ausführungsform ist überdies vorgesehen, dass an dem Ventilsitz am Grenzbereich zu der Durchtrittsöffnung mindestens eine Bypassgeometrie, bevorzugt mehrere in gleichen Abständen umlaufende Bypassgeometrien ausgebildet ist.

Im geschlossenen Zustand des Ventils wird für verschiedene Anwendungen ein definierter Durchfluss benötigt, z.B. bei einer Leckageprüfung oder wenn der Raum vor dem Regelventil gespült werden soll, wie beispielsweise bei einer Valve-Proof-System-Prüfung. Um einen "Blendeneffekt" zu verhindern, welcher bei steigendem Druck größere Durchflüsse zur Folge hat, wird der kleinste Querschnitt, z.B. durch eine Anlagefläche zwischen Ventilkörper und Ventilsitz, nicht verschlossen. Infolge der Ausbildung am Grenzbereich der Durchtrittsöffnung wird der Bypass unter dem Teillastbereich definiert, ohne weiteren Einfluss auf das Regelverhalten zu nehmen.

In einer weiteren Ausführungsform des Gasstromregelventils ist bevorzugt vorgesehen, dass die Bypassgeometrie einen definierten Durchfluss des Gasstroms bei geschlossenem Gasstromregelventil ermöglicht. Hierdurch kann in vorteilhafter Weise ein Blendeneffekt des Gasstromregelventils vermieden werden.

In einer weiteren Ausführungsform des Gasstromregelventils ist bevorzugt vorgesehen, dass der definierte Durchfluss über eine Toleranzlage von Ventilkörper und Ventilsitz und anteiligem Querschnitt am Umfang einer Anlagekante des Ventilkörpers begrenzt ist. Vorteilhaft ist hierbei, dass auf Grund einer Beweglichkeit wenigstens eines der beiden den Bypass bildenden Elemente, diese im Betrieb des Gasstromregelventils gespült werden, beziehungsweise abgeblasen werden. Hierdurch kann ein Verschmutzen durch Partikel verhindert werden.

In einer weiteren Ausführungsform des Gasstromregelventils ist bevorzugt vorgesehen, dass ein Umklappen der Membran mittels eines Stützelements verhindert ist. In einem geöffneten Zustand des Gasstromregelventils liegt die Membran nicht auf dem Stützelement auf und hat somit keinen Einfluss auf den Betrieb, wohingegen die Membran im geschlossenen Zustand bei Unterdruck, beispielsweise durch einen Lüfter bei einem Spülen des Gasventils auf dem Stützelement aufliegt. Beim Öffnen des Gasstromregelventils und/oder bei Beaufschlagung mit Unterdruck können somit vorteilhaft Schwingungen vermieden werden, die ein Startverhalten des Gasstromregelventils negativ beeinflussen können.

### Beschreibung eines Ausführungsbeispiels:

Weitere Merkmale sowie beschriebene Ausführungen der Erfindung sollen in den nachfolgenden Ausführungsbeispielen näher erläutert werden. Es zeigen dabei
- Fig. 1: eine Übersicht über eine Gasventileinheit in geschlossener Stellung,
- Fig. 2: eine Übersicht über eine Gasventileinheit in geöffneter Stellung,
- Fig. 3: eine Detailansicht auf ein Gasstromregelventil in geschlossener Stellung,
- Fig. 4: eine Detailansicht auf ein Gasstromregelventil in geöffneter Stellung und
- Fig. 5: eine vergrößerte Ansicht eines Ausschnitts des Gasstromregelventils mit Diffusor in geschlossener Stellung.

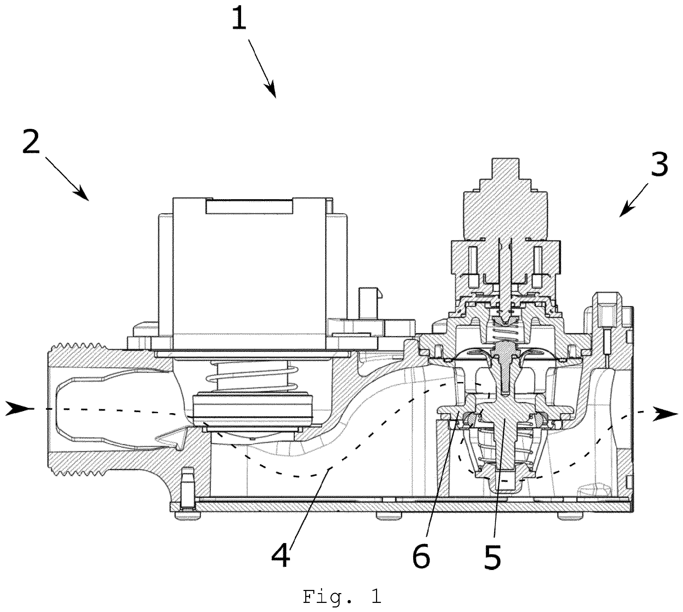

Figur 1 zeigt eine Übersicht über eine Gasventileinheit 1 in geschlossener Stellung, umfassend ein Sicherheitsventil 2, sowie ein Gasstromregelventil 3 zur Volumenstromregelung eines Gasstroms mit einem Gasströmungsverlauf 4.

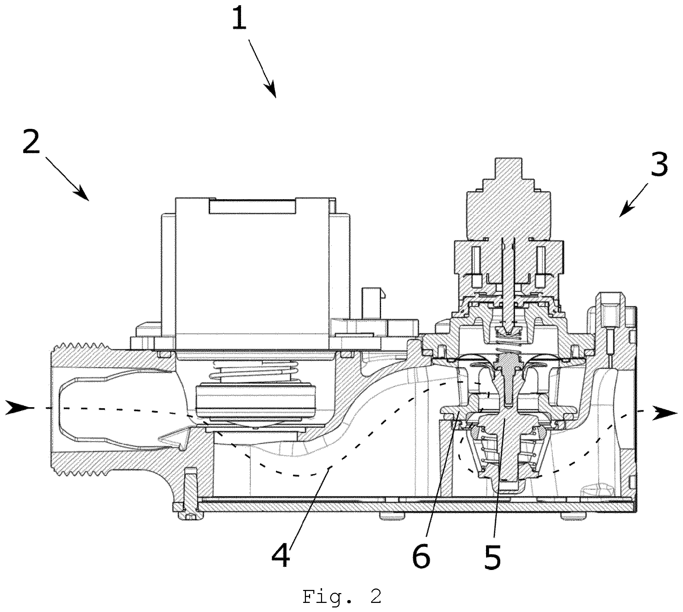

Figur 2 zeigt in Analogie zu Figur 1 eine Übersicht über die Gasventileinheit 1 in geöffneter Stellung, umfassend das Sicherheitsventil 2, sowie das Gasstromregelventil 3 zur Volumenstromregelung des Gasstroms mit dem Gasströmungsverlauf 4. In einer Zusammenschau der Figuren 1 und 2 ist dargestellt, dass das Gasstromregelventil 3 zur Regelung des Gasströmungsverlaufs 4 mittels eines Ventilkörpers 5, der sich relativ zu einem Ventilsitz 6 bewegt, geöffnet werden kann.

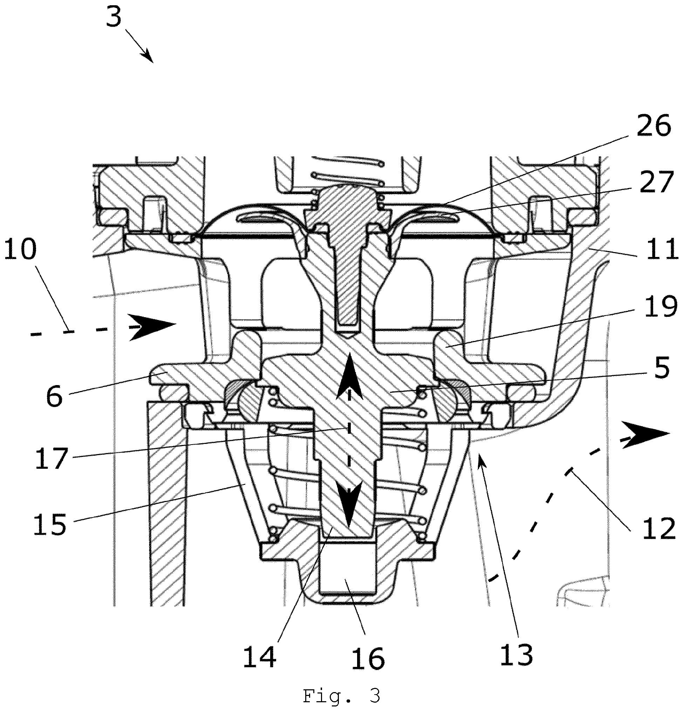

Fig. 3 zeigt eine Detailansicht des Gasstromregelventils 3 in geschlossener Stellung. Das Gasstromregelventil 3 umfasst ein Gehäuse 11 mit Gaseinlass 10, ein dem Ventilsitz 6 zugeordneten Ventilkörper 5, wobei der Ventilkörper 5 von einer Membran 26 gehalten ist. Ein Umklappen der Membran auf Grund von anstehenden Unterdrucks vor dem Öffnen des Sicherheitsventils wird mittels eines Stützelements 27 verhindert. Ein plötzlicher und durch das Öffnen des Sicherheitsventils auftretender Druckanstieg wirkt sich somit nicht negativ auf das Startverhalten aus und das Schwingungsverhalten wird reduziert. Ein homogener Strömungsverlauf kann dadurch schneller erreicht werden. Somit kann die Kapazität optimiert und eine Verminderung der Geräuschentwicklung erreicht werden.

Weiterhin ist dargestellt, dass ein dem Ventilsitz 6 nachgeordneten Führungskorb 15 in dem Gehäuse 11 und an dem Ventilsitz 6 ausgebildet ist und an dem Ventilkörper 5 ein Führungsschaft 14 ausgebildet ist, wobei der Führungsschaft 14 in mindestens einem Abschnitt des Führungskorbs 15 linear in Öffnungsrichtung des Ventils geführt ist und einen Dämpfer 16 für die Bewegung des Ventilkörpers 5 umfasst. Ein unerwünschtes Auslenken des Gasstromregelventils 3 sowohl in Axialrichtung, sowie Querrichtung kann dadurch verhindert werden, ohne dass das Regelverhalten beeinflusst würde. Zusätzlich kann der Dämpfer 16 Schwingungen in axialer Richtung reduzieren.

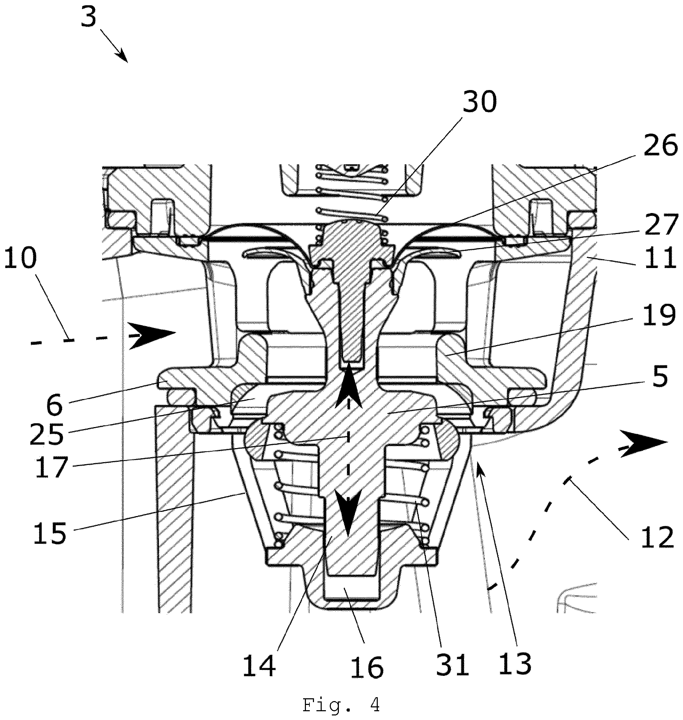

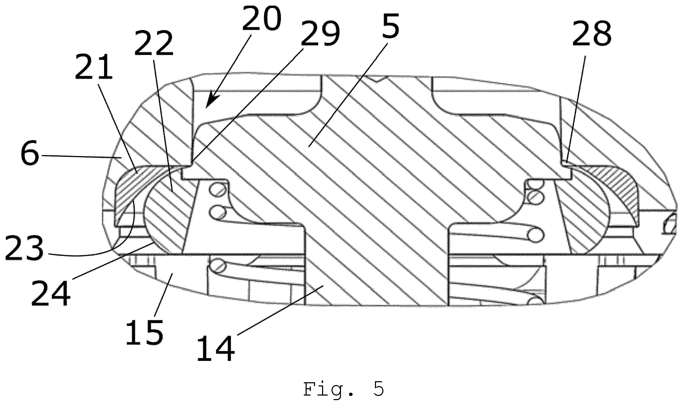

Figur 4 zeigt eine Detailansicht auf ein Gasstromregelventil 3 analog zu Figur 3 in geöffneter Stellung. Das Gasstromregelventil 3 umfasst einen dem Ventilkörper 5 nachgelagerten und in dem Gehäuse 11 vorgesehenen Gasauslass 12. Der Ventilkörper 5 in dem Ventilsitz 6 ist zur Ausbildung eines regelbaren Querschnitts einer Durchtrittsöffnung 25 für den Gasdurchtritt in einer ersten Bewegungsrichtung 17 beweglich angeordnet. Der Ventilkörper 5 wird hauptsächlich von einer oberen Feder 30 und einer unteren Feder 31 gehalten. Die Kraft der oberen Feder 30 und der unteren Feder 31 ist derart ausgelegt, dass der Ventilkörper in einer Ruhestellung gegen eine Anlegekante (in Figur 5 dargestellt) gedrückt wird. Vornehmlich dient die Membran 26 sowohl als Dichtung, als auch als Vermittlerin einer pneumatischen Kraft, die in Abhängigkeit des herrschenden Drucks den Ventilkörper 5 unterschiedlich stark nach oben drückt. Auf Grund der rotationssymmetrischen Form der Membran 26 wird dadurch der Ventilkörper 5 zusätzlich zentriert.

Weiterhin umfasst das Gasstromregelventil 3 einen verstellbaren Diffusor 13. Ein sich hierdurch veränderbarer Verlauf des sich öffnenden Querschnitts einer Durchtrittsöffnung 25 kann eine dadurch gegebene Druckregelung zur optimierten Durchströmung des Gasstromregelventils 3 ermöglichen, was für eine homogenere Durchströmung und einer Erhöhung der Kapazität des Gasstromregelventils 3 genutzt werden kann.

In einer Zusammenschau der Figuren 3 und 5 ist dargestellt, dass der verstellbare Diffusor 13 ein verstellbares Querschnittsverhalten mittels zweier sich voneinander entfernender, nicht linearer mit einem Offset in Öffnungsrichtung überlagerter Kurven, aufweist. Die Wirkung des Diffusors 13 kann dadurch zur Verbesserung der Strömungsführung optimiert werden. In Abhängigkeit von Ventilstellung und Betriebsdruck, bei gegebenen Durchflussströmungen, entsteht eine Kraft, die das Gasstromregelventil 3 öffnet, beziehungsweise schließt. Dies kann sich somit vorteilhaft auf das Regelverhalten des Gasstromregelventils 3 auswirken.

Weiterhin ist dargestellt, dass an dem Ventilsitz 6, vor der Durchtrittsöffnung 25 eine in Strömungsrichtung gleichförmige und hohlzylinderförmige Einlaufstrecke 19 ausgebildet ist. Die Durchtrittsöffnung 25 ist hierbei als Ringspalt ausgebildet. Eine homogenere Anströmung des Gasstromregelventils 3 kann somit ermöglicht werden, was eine Geräuschentwicklung reduzieren und eine Optimierung der Kapazität erreichen kann.

Fig. 5 zeigt eine vergrößerte Ansicht eines Ausschnitts des Gasstromregelventils 3 mit Diffusor 13 in geschlossener Stellung. In einer Zusammenschau mit Figur 4 ist dargestellt, dass das Gasstromregelventil 3 an dem Ventilsitz 6 im Bereich der Durchtrittsöffnung 25 (in Figur 4 dargestellt) eine Ventilsitz-Diffusorgeometrie 21 und an dem Ventilkörper 5 im Bereich der Durchtrittsöffnung 25 (in Fig. 4 dargestellt) eine Ventilkörper-Diffusorgeometrie 22 umfasst. Dies kann sich vorteilhaft auf die Strömungsführung und somit auf die Optimierung der Kapazität auswirken.

An einem Ventilsitz 6 ist an dem Grenzbereich zu der Durchtrittsöffnung 25 eine Bypassgeometrie 28, bevorzugt mehrere in gleichen Abständen umlaufende Bypassgeometrien (in Figur 5 dargestellt) ausgebildet. Ein definierter Durchfluss ist im geschlossenen Zustand möglich, der über eine Toleranzlage von Ventilkörper 5 und Ventilsitz 6 und anteiligem Querschnitt am Umfang einer Anlegekante 29 des Ventilkörpers 5 begrenzt ist. In vorteilhafter Weise kann dies das Auftreten eines Blendeneffekts vermeiden und die Kapazität und/oder die Geräuschentwicklung werden durch die Bypassgeometrie 28 nicht beeinflusst.

Weiterhin ist dargestellt, dass einerseits die Ventilsitz-Diffusorgeometrie 21 als Hohlkehle 23 und einstückig (nicht dargestellt) mit dem Ventilsitz 6 ausgebildet ist und andererseits die Ventilkörper Diffusorgeometrie 22 einstückig (nicht dargestellt) mit dem Ventilkörper 5 ausgebildet ist. Dies kann positiv zur Reduzierung der Kosten des Herstellungsprozesses genutzt werden. Die Ventilkörper-Diffusorgeometrie 21 ist weiterhin als Ringsegment mit konvexer und kreisförmiger Mantelkontur ausgebildet dargestellt, was die Nutzung unterschiedlicher abschnitte der Ventilkörper-Diffusorgeometrie 22 ermöglicht, sowohl als Führungselement für die Strömung des Gasstroms, als auch als Konturelement für die Ausbildung eines sich aufweitenden Querschnitssverlaufs der die Effekte des Diffusors 13 vermittelt. Die Ventilkörper-Diffusorgeometrie 22 mit der Ventilsitz-Diffusorgeometrie 21 bildet einerseits, in einem in Strömungsrichtung oberen Abschnitt, einen Strömungskanal aus und bildet andererseits, in einem in Strömungsrichtung folgenden unteren Abschnitt, eine Aufweitung zwischen den Radien einen Diffusorkanal aus. Eine gleichmäßige und ungestörte Anströmung des Diffusors 13 kann dadurch erzielt werden, was die Durchströmung begünstigt und eine homogenere Wirkung des Diffusors 13 erlaubt.

### Bezugszeichenliste:

- 1: Gasventileinheit
- 2: Sicherheitsventil
- 3: Gasstromregelventil
- 4: Gasströmungsverlauf
- 5: Ventilkörper
- 6: Ventilsitz
- 10: Gaseinlass
- 11: Gehäuse
- 12: Gasauslass
- 13: Diffusor
- 14: Führungsschaft
- 15: Führungskorb
- 16: Dämpfer
- 17: Bewegungsrichtung
- 19: Einlaufstrecke
- 20: Ringspalt
- 21: Ventilsitz-Diffusorgeometrie
- 22: Ventilkörper-Diffusorgeometrie
- 23: Hohlkehle
- 24: Ringsegment
- 25: Durchtrittsöffnung
- 26: Membran
- 27: Stützelement
- 28: Bypassgeometrie
- 29: Anlegekante
- 30: obere Feder
- 31: untere Feder

## Patentansprüche

1. Gasstromregelventil (3), wobei das Gasstromregelventil (3)
- ein Gehäuse (11) mit einem Gaseinlass (10),
- ein in dem Gehäuse (11) angeordneten Ventilsitz (6),
- ein dem Ventilsitz (6) zugeordneten Ventilkörper (5),
wobei der Ventilkörper (5) von einer oberen Feder (30) und einer unteren Feder (31) gehalten und mittels einer Membran (26) zentriert ist,
- sowie einen dem Ventilkörper (5) nachgelagerten, in dem Gehäuse (11) vorgesehenen Gasauslass (12) umfasst,
wobei der Ventilkörper (5) in dem Ventilsitz (6) zur Ausbildung eines regelbaren Querschnitts einer Durchtrittsöffnung (25) für den Gasdurchtritt in einer ersten Bewegungsrichtung (17) beweglich angeordnet ist,
**dadurch gekennzeichnet, dass**
ein dem Ventilsitz (6) nachgeordneter Führungskorb (15) in dem Gehäuse (11), bevorzugt an dem Ventilsitz (6) oder einer Federaufnahme ausgebildet ist und an dem Ventilkörper (5) ein Führungsschaft (14) ausgebildet ist, wobei der Führungsschaft (14) in mindestens einem Abschnitt des Führungskorbs (15) linear in Öffnungsrichtung des Ventils geführt ist und insbesondere einen Dämpfer (16) für die Bewegung des Ventilkörpers (5) umfasst.

2. Gasstromregelventil (3) nach Anspruch 1, **dadurch gekennzeichnet, dass** das Gasstromregelventil (3) einen verstellbaren Diffusor (13) umfasst.

3. Gasstromregelventil nach Anspruch 1 oder 2, **dadurch gekennzeichnet, dass** an dem Ventilsitz (6) im Bereich der Durchtrittsöffnung (25) eine Ventilsitz-Diffusorgeometrie (21) und/oder an dem Ventilkörper (5) im Bereich der Durchtrittsöffnung (25) eine Ventilkörper-Diffusorgeometrie (22) umfasst ist.

4. Gasstromregelventil (3) nach einem der vorangegangenen Ansprüche, **dadurch gekennzeichnet, dass** der verstellbare Diffusor (13) sein verstellbares Querschnittsverhalten mittels zweier sich voneinander entfernender Kurven, insbesondere nicht linearer Kurven, bevorzugt überlagert mit einem Offset in Öffnungsrichtung, aufweist.

5. Gasstromregelventil (3) nach einem der vorangegangenen Ansprüche, **dadurch gekennzeichnet, dass** an dem Ventilsitz (6), vor der Durchtrittsöffnung (25) eine Einlaufstrecke (19), bevorzugt eine in Strömungsrichtung gleichförmige Einlaufstrecke (19), insbesondere eine hohlzylinderförmige Einlaufstrecke (19), ausgebildet ist.

6. Gasstromregelventil (3) nach einem der vorangegangenen Ansprüche, **dadurch gekennzeichnet, dass** die Durchtrittsöffnung (15) als Ringspalt ausgebildet ist.

7. Gasstromregelventil (3) nach einem der vorangegangenen Ansprüche 3 bis 6, **dadurch gekennzeichnet, dass** die Ventilsitz-Diffusorgeometrie (21) einstückig mit dem Ventilsitz (6) ausgebildet ist.

8. Gasstromregelventil (3) nach einem der vorangegangenen Ansprüche 3 bis 7, **dadurch gekennzeichnet, dass** die Ventilkörper-Diffusorgeometrie (22) einstückig mit dem Ventilkörper (5) ausgebildet ist.

9. Gasstromregelventil (3) nach einem der vorangegangenen Ansprüche 3 bis 8, **dadurch gekennzeichnet, dass** die Ventilsitz-Diffusorgeometrie (21) als Hohlkehle ausgebildet ist.

10. Gasstromregelventil (3) nach einem der vorangegangenen Ansprüche 3 bis 9, **dadurch gekennzeichnet, dass** die Ventilkörper-Diffusorgeometrie (22) als Ringsegment, insbesondere mit konvexer Mantelkontur, bevorzugt mit kreisförmiger Mantelkontur ausgebildet ist.

11. Gasstromregelventil (3) nach einem der vorangegangenen Ansprüche 3 bis 10, **dadurch gekennzeichnet, dass** die Ventilkörper-Diffusorgeometrie (22) mit der Ventilsitz-Diffusorgeometrie (21) in einem in Strömungsrichtung oberen Abschnitt einen Strömungskanal ausbildet und in einem in Strömungsrichtung folgenden unteren Abschnitt eine Aufweitung zwischen den Radien einen Diffusorkanal ausbildet.

12. Gasstromregelventil nach einem der vorangegangenen Ansprüche, **dadurch gekennzeichnet, dass** an dem Ventilsitz (21) am Grenzbereich zu der Durchtrittsöffnung mindestens eine Bypassgeometrie (28), bevorzugt mehrere in gleichen Abständen umlaufende Bypassgeometrien ausgebildet ist.

13. Gasstromregelventil (3) nach einem der vorangegangenen Anspruche, **dadurch gekennzeichnet, dass** die Bypassgeometrie (28) einen definierten Durchfluss des Gasstroms bei geschlossenem Gasstromregelventil (3) ermöglicht.

14. Gasstromregelventil (3) nach einem der vorangegangenen Ansprüche, **dadurch gekennzeichnet, dass** der definierte Durchfluss über eine Toleranzlage von Ventilkörper (5) und Ventilsitz (6) und anteiligem Querschnitt am Umfang einer Anlegekante (29) des Ventilkörpers (5) begrenzt ist.

15. Gasstromregelventil (3) nach einem der vorangegangenen Ansprüche, **dadurch gekennzeichnet, dass** ein Umklappen der Membran (26) mittels eines Stützelements (27) verhindert ist.
